# EUROPEAN PATENT SPECIFICATION

(11) **EP 4 532 308 B1**
(45) Date of publication and mention of the grant of the patent: **01.04.2026**
(21) Application number: 23733451.1
(22) Date of filing: 26.05.2023
(51) Int. Cl.: B62M 6/60, B62M 1/28

(54) **DEVICE FOR THE TRANSMISSION OF AN EFFECTIVE DRIVING TORQUE FROM RECIPROCATING MOTION TO CIRCULAR MOTION**
VORRICHTUNG ZUR ÜBERTRAGUNG EINES WIRKSAMEN ANTRIEBSMOMENTES VON EINER HIN- UND HERBEWEGUNG AUF EINE DREHBEWEGUNG
DISPOSITIF DE TRANSMISSION D'UN COUPLE D'ENTRAÎNEMENT EFFICACE D'UN MOUVEMENT ALTERNATIF À UN MOUVEMENT CIRCULAIRE

(30) Priority: 26.05.2022 IT 202200011081
(43) Date of publication of application: 09.04.2025
(73) Proprietor: Baglioni, Emanuele, 50018 Scandicci (IT)
(72) Inventor: Baglioni, Emanuele, 50018 Scandicci (IT)
(74) Representative: Savi, Massimiliano
(86) International application number: PCT/IB2023/055414
(87) International publication number: WO 2023/228141

(56) References cited:
- US-A1- 2006 183 580
- US-A1- 2019 111 995

## Description

### BACKGROUND ART

Conventional mechanical systems with cranks or levers are known to be used to convert the energy supplied by a user into mechanical energy that can, for example, be used to provide torque adapted to put a drive shaft into rotation. In these cases, the driving torque is generated by the user with a pushing or pulling force by means of cranks.

The length of said cranks generally depends on the breadth and mobility of the limbs used to apply force, or the field of use (e.g., racing bikes, MTBs, fitness bikes, touring bikes, hand bikes, etc.).

In traditional crank systems with a circular movement, the need is felt to limit the length of the cranks because an excessive crank length would not allow efficient biomechanical movement by the user.

Indeed, excessive crank lengths can generate incorrect postures or cause disease due to improper limb movements.

Conversely, short crank lengths generate overall inefficient biomechanical performance.

The user's muscle force applied when the cranks are at the dead centers generates a torque with zero resultant.

Indeed, in a conventional bicycle with circular crank movement, in the case of the need to develop high torques at low RPMs, there is the objective difficulty of being able to apply force while crossing the dead centers (lower and upper).

In addition, in the traditional system with circular motion, the cranks, being timed by 180° or parallel (e.g., in the case of hand-bikes), transmit force with a fixed cycle (180°+ 180°).

The most direct method to reduce the above problems is to limit the length of the cranks.

Therefore, shorter-length cranks, which allow an increase in pedaling cadence, are usually used to improve biomechanical performance.

This system is effective and generally simple to implement, but it reduces the maximum applicable torque because the length of the crank itself is directly proportional to the driving torque produced.

The following describes some methods of the prior art aimed at improving biomechanical performance in a user's energy-driven mechanisms.

A bicycle is a vehicle propelled by the muscle power of a user's limbs. It usually consists of a frame to which two aligned wheels are tied and it is equipped with a mechanical system for transmitting power to the driving wheel.

T02010A000499 discloses a device in which the cranks moving in circular motion can transmit to the drive shaft, by means of unidirectional freewheels, an effective torque in both directions of crank rotations, clockwise and counterclockwise.

Two freewheels are installed on the drive shaft with the inner diameter of the wheels engaging directly on the shaft and the outer diameter engaging instead on two bevel gears.

The two bevel gears are mutually connected by pinions to reverse the direction of rotation.

The pedaling direction reversal device of the type described above is subject to some disadvantages.

In particular, this device provides for a circular motion of the cranks, not allowing the possibility of installing cranks with longer than conventional lengths. Furthermore, cranks timed by 180° maintain active dead center limits.

US 2013/0205928 discloses a transmission device for means with cranks or levers with reciprocating motion of the cranks themselves.

Two cranks are connected to a drive shaft by means of freewheels.

The two cranks move reciprocally in a reciprocating motion by means of a mechanical rotation reverser, made by a bevel gear and bevel pinion system. The cranks are connected, by means of toothed wheels, to freewheels which appropriately installed mesh on the drive shaft to transmit torque, in the desired direction, to the drive shaft. The non-pushing crank, if desired, can also be used to generate an input torque (by means of the pulling force).

The device described in US 2013/0205928 has some disadvantages, such as the inability to time the cranks in any position relative to the position of the transmission members, such as chain, belt, cardan shaft. Indeed, the crank is installed on the same side as the drive crown wheel and must work in such a circle arc that it does not interfere with the transmission devices, the latter being necessary to transfer motion to the drive wheel of the vehicle. A device with a variant of the previously described system is known in EP2679480A. The device is made by leaving the two cranks disconnected from each other and recalling the cranks themselves back to the active position by means of a spring.

The criticality of this system lies mainly in the inability to transmit push and pull torque simultaneously because one of the phases is used, by means of springs, only to recall the lever to the pushing position.

Considering the prior art described above, it is still desirable to provide a system, which is capable of transmitting, by means of cranks or levers, effective torque to a drive shaft so that the problems associated with crank position and crank lengths are overcome.

It would also be desirable for the system to be energy efficient by being able to offer improved biomechanical performance. Document US2019111995A1, which is considered being the closest prior art, shows a device for transmitting a driving torque comprising:a shaft;a crown wheel associated with said shaft;a first crank connected to a first transmission element-;a second crank connected to a second transmission element;a first unidirectional joint connected to said first crank;a second unidirectional joint connected to said second crank ,said unidirectional joints being adapted to lock said cranks with said shaft when said cranks are actuated by a user in a predetermined direction and are such to disengage said cranks from said shaft when said cranks are actuated in the opposite direction with respect to said predetermined direction; a reversing element comprising a kinematic mechanism adapted to engage with said first transmission element and said second transmission element and adapted to force said cranks to rotate in opposite directions,characterized in that said kinematic motion is of the parallel axis type and adapted to supply continuous driving torque to said shaft and said crown wheel during the movement of said cranks.

### BRIEF DESCRIPTION OF THE INVENTION

The present invention relates to an alternative lever transmission device, in particular, but not exclusively, for pedal-powered vehicles. The levers, made from cranks, are selectively connected to a drive shaft by unidirectional couplings (freewheels or overdrive couplings). A reversing mechanism allows the freewheels to engage on the drive shaft alternately, so that the torque generated by the cranks can be transmitted in the desired direction, such as pushing or pulling torque.

Furthermore, the non-pushing crank can also be used to impart a pulling force. The user can reverse the stroke of the cranks at any time using only the forces applied by the feet, and the arch-shaped range of motion is infinitely variable.

The present invention relates to a mechanical transmission device capable of converting a force expressed by a user's limbs, by means of cranks or levers, into an effective driving torque at a drive shaft. By means of the action of freewheels (unidirectional mechanical systems), said cranks, moving in reciprocating motion, transmit torque to the drive shaft in the desired direction.

Furthermore, the mechanical device according to the invention allows a torque value to be generated at the drive shaft by means of cranks by applying both a pulling and a pushing force. The force applied to the cranks allows to have effective torque at the drive shaft for the entire range of use, without having to make the cranks themselves travel complete 360° circular trajectories.

The aforementioned mechanical device makes it possible, even with minimal oscillations, to provide driving torque to the drive shaft.

By limiting the movement of the cranks to a circle arc, it is possible to use cranks with extreme lengths, allowing higher torque values than a traditional circular motion mechanical system.

In the suggested device, the cranks move in a reciprocating motion and transmit torque to the drive shaft, which results in a circular motion. The possibility of movement is infinitely variable. The user can reverse the pedal stroke at any time using only the forces applied to the cranks. The device allows the cranks to be timed in any desired circle arc.

The present invention applies to any pedal-powered vehicle, as well as to any other machine in which a moving lever is used as a power input in which the force of a user's limbs is used. The illustrations attached to this application show, by way of a non-limiting example, the use of the invention in association with a bicycle frame.

In particular, the present invention provides a device capable of increasing the torque transmitted by increasing the length of the cranks.

The mechanical device according to the invention also allows the torque generated by the cranks to be converted through infinitesimal oscillations. Furthermore, the present invention relates to a mechanical device where the thrust applied by the user is independent of the length of the cranks so that greater torque can be developed even with reduced oscillations of the levers or cranks themselves for the same applied force.

Further peculiar aspects of this invention, by means of a favorite embodiment thereof, is being able to time the cranks so that they are mutually parallel. The aforesaid solution allows simultaneous application of the thrust force generated on both cranks and then reversing the force in traction when at the end of the desired oscillation.

This embodiment is strongly indicated when the force applied by the user is generated by the upper limbs of the body. This system makes it possible to perform an exercise with more linear body and arm movement than the traditional circular system.

A preferred embodiment of the device according to the invention is obviously used in association with bicycles and pedal-powered vehicles.

In this and other embodiments, the user can position the cranks and choose their timing to allow for biomechanically effective use.

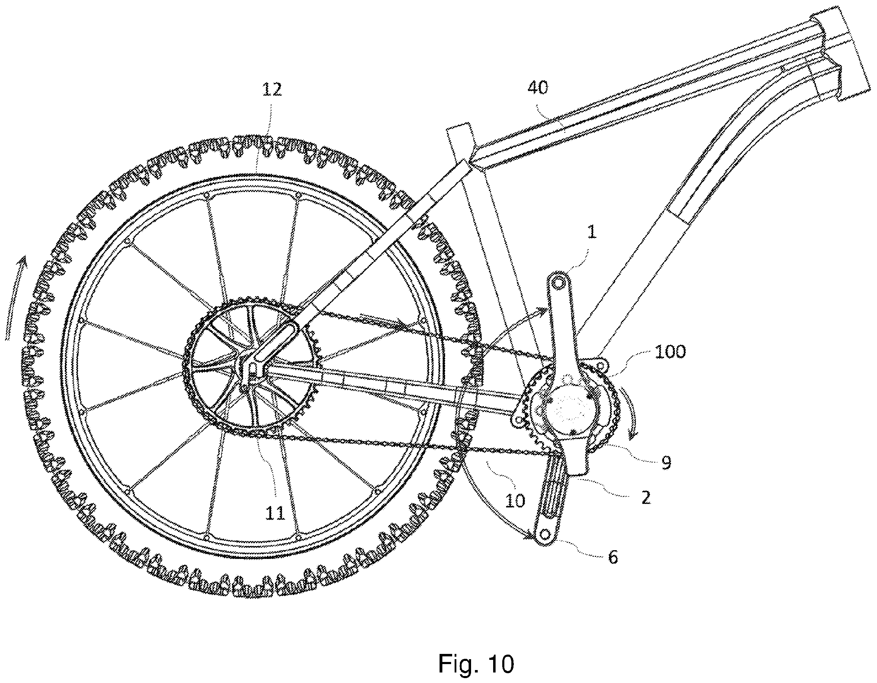

The flexibility in the timing of the cranks makes it possible to shift the applied forces and thus vary the overall center of gravity generated by the weight of the user and the weight of the mechanical means, in contrast to a traditional bike on which the center of gravity cannot be changed because the direction of thrust cannot be changed (direction of the driving torque). The fact that the present invention allows for the cranks to be timed to the desired position allows for numerous advantages, such as, for example, in the case of application on mountain bikes (MTBs) where there is a need for more grip on the driving wheel due to routes where the terrain has constant variations and sometimes precarious grip. The cranks can be appropriately timed to provide a push closer to the rear wheel (as shown in the accompanying Fig.10). The posture assumed by the user in this configuration allows for more effective thrust with obvious benefits not only on thrust but also on the user's balance.

The mechanical device of the present invention allows the user if the force applied by the lower limbs are used, to make the legs work in parallel to favor posture to ensure greater safety and stability in controlling the vehicle and greater and more natural flexibility of the legs compared to a conventional system where the cranks are mutually timed at 180 degrees.

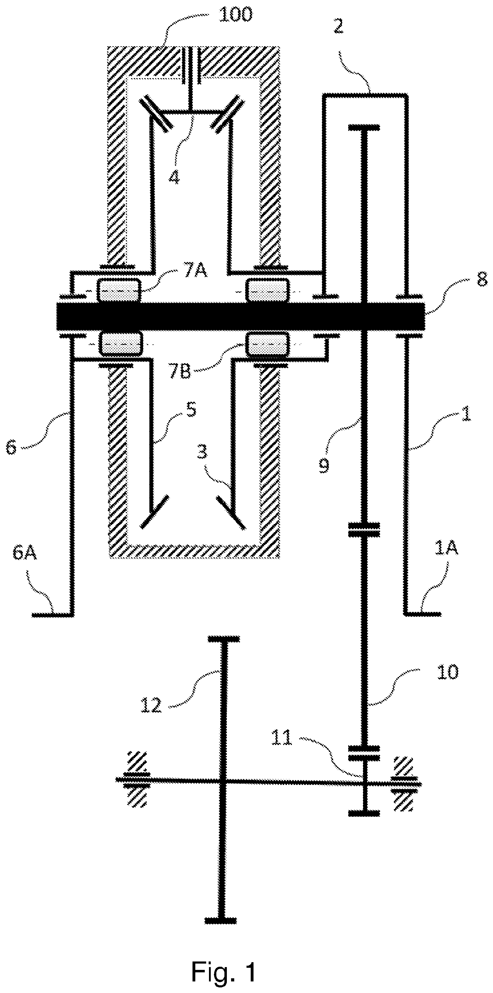

For positioning the cranks backward (opposite to the direction of motion) so that one of them would interfere with the torque transmission system (chain and the like), the invention was implemented with a special lever (torque transmitter), which bypasses the crown wheel and eliminates the interference, as shown in figure 1 with a traditional crank (left) and a torque transmitter (right) . The present invention also makes it possible to apply minimal torques with minimal crank oscillations.

Therefore, this device is particularly suitable when the mobility of the user's limb is not complete and it is useful to have a device, which allows to obtain the desired function to reduce the arc of use according to the user's needs.

The breadth is adjusted independently by the user, and the device adapts to the desired thrust arc, allowing, with the same gear ratio, the thrust to be transferred from one crank to the other at any time.

A variation of the device according to this description allows the rotation of the drive shaft with the driven wheel to be fixed, eliminating the freewheel normally installed on the rear wheel of the bike. This configuration, when the cranks are not transmitting the torque, receives inertia from the flywheel or the driven wheel so that the transmission members can be kept in motion. The aforesaid configuration is intended to make the rotational speed of the drive shaft more stable and homogeneous and consequently improve the performance constant generated by the force applied by the user.

Furthermore, the aforesaid configuration allows the chain to be in constant motion even at low speeds, so a vehicle equipped with a gearbox will be able to vary the ratio without necessarily having to move the cranks.

Finally, the drive shaft, associated with the driving crown wheel, not being directly connected to the cranks, can be connected by means of appropriate transmission systems to an electric motor, thus allowing for power-assisted pedaling.

Additional features and advantages of the present invention are described and will be apparent from the detailed description of the invention and can be inferred from the dependent claims.

In order to meet contingent needs, those skilled in the art may make changes and adaptations to the embodiments of the mechanical system described above or can replace elements with others, which are functionally equivalent, without departing from the scope of the following claims. Each of the features described above as belonging to a possible embodiment can be implemented independently of the other embodiments described.

### BRIEF DESCRIPTION OF THE DRAWINGS

Additional features and advantages of the present invention are described and will be apparent from the detailed description of the invention and the following drawings, in which:
Fig. 1 shows a functional diagram of a preferred embodiment of the device according to the present invention comprising a driving torque transmitter associated with offset cranks;
Fig. 2 shows a functional diagram of a preferred embodiment of the device according to the present invention comprising a driving torque transmitter associated with parallel cranks;
Fig. 3 shows a functional diagram of a preferred embodiment of the device according to the present invention comprising a driving torque transmitter associated with offset cranks and an electric generator installed on the driven wheel;
Fig. 4 shows a functional diagram of a preferred embodiment of the device according to the present invention comprising a driving torque transmitter associated with offset cranks and an electric generator connected to the drive shaft;
Fig. 5 shows a functional diagram of a preferred embodiment of the device according to the present invention comprising a driving torque transmitter associated with parallel cranks and an electric generator installed on the driven wheel;
Fig. 6 shows a functional diagram of a preferred embodiment of the device according to the present invention comprising a driving torque transmitter associated with parallel cranks and an electric generator connected to the drive shaft;
Fig. 7 shows an axonometric view of a preferred embodiment of the device according to the present invention;
Fig. 8 shows an axonometric view of a preferred embodiment of the device according to the present invention using a double cylindrical gear transmission, with the main parts highlighted;
Fig. 9 shows an axonometric view of a preferred embodiment of the device according to the present invention which uses a gear transmission and a chain/belt transmission, with the main parts highlighted;
Fig. 10 shows an example of installation on a bicycle frame of a preferred embodiment of the device according to the present invention;
Fig. 11 shows another example of the application of a preferred embodiment of the device according to the present invention;
Fig. 12 shows an axonometric view of a preferred embodiment of the device according to the present invention configured with dual drive chains, one of which allows reversal of the direction of rotation;
Fig. 13 shows a functional diagram of the embodiment of Fig. 12 comprising a driving torque transmitter associated with offset cranks;

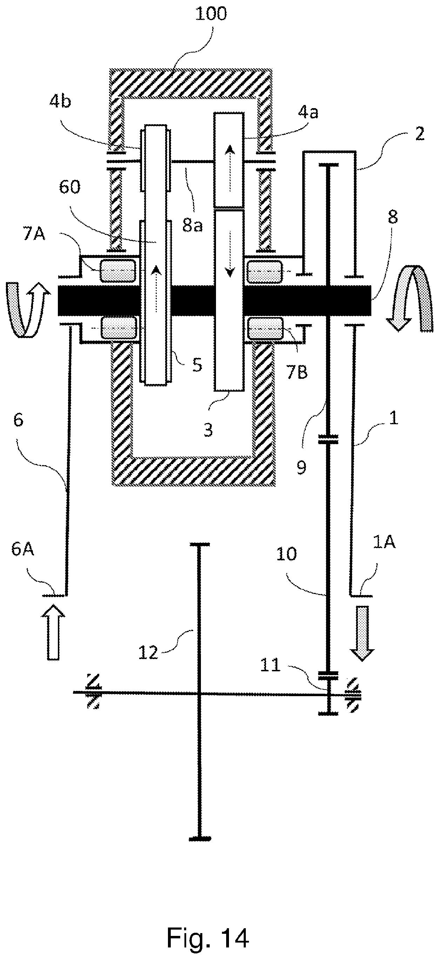

Fig. 14 shows a functional diagram of a preferred embodiment of the device according to the present invention comprising a driving torque transmitter associated with offset cranks, and

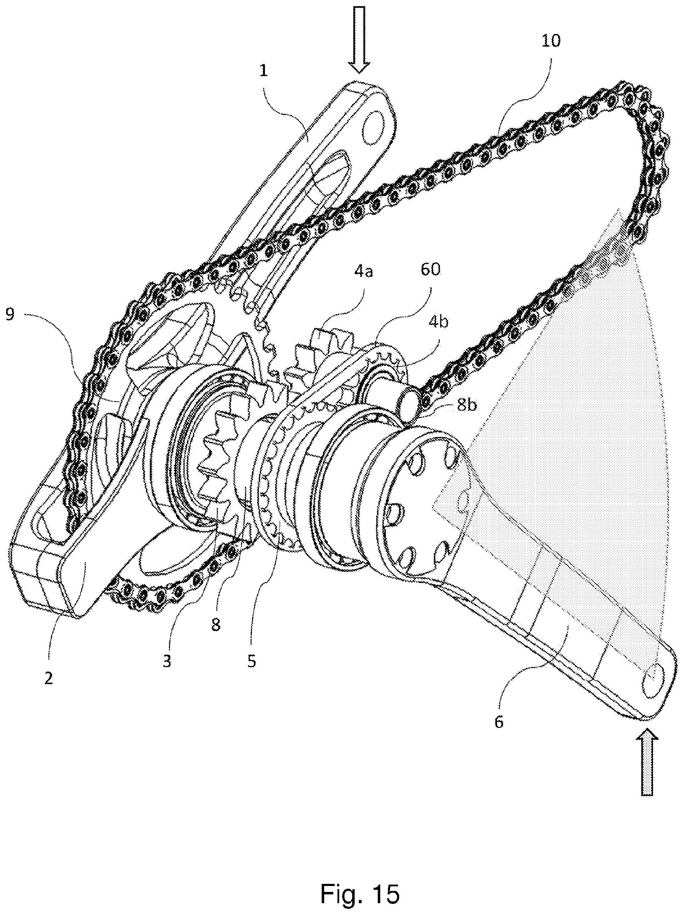

Fig. 15 shows an axonometric view of a preferred embodiment of the device according to the present invention with parts highlighted.

The following description of exemplary embodiments relates to the accompanying drawings. The same reference numbers in the various drawings identify the same elements or similar elements. The following detailed description does not limit the invention. The scope of the invention is defined by the appended claims.

### DETAILED DESCRIPTION OF THE INVENTION

The examples described below are preferred embodiments of the present invention. Other embodiments capable of reproducing the invention are possible and are intended to be part of the present invention. The present invention will be described with principal reference to its use in association with a bicycle, being understood that this association is intended to be merely illustrative and not limiting of the scope of the invention, the invention applying to other fields as well where there is a need for the use of a circular motion generated by means of action with movable levers or cranks moving in reciprocating motion by means of the force applied by a user.

Therefore, the present invention relates to a device for transmitting a continuous driving torque starting from the actuation of levers, in which the levers do not rotate continuously but rather travel a forward and backward arc, simultaneously or in a reciprocating manner.

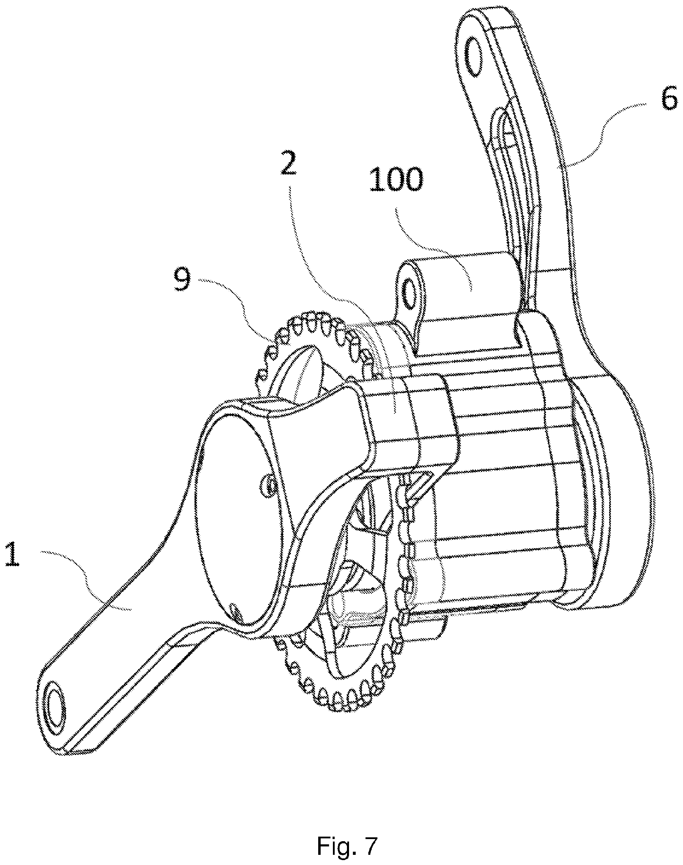

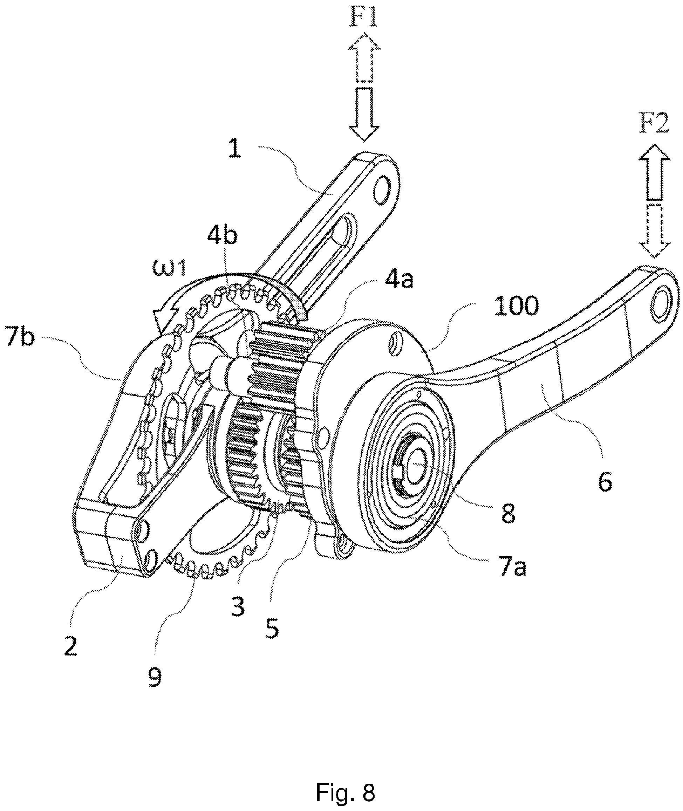

With reference to Figures 7 and 8, the device according to the present invention is illustrated in a preferred embodiment for installation on a lever vehicle, e.g., such as a bicycle.

In this preferred embodiment, the device according to the invention comprises a supporting box 100 which, in this case, is adapted to be fixed, for example, to a bicycle frame, and is rotatably connected to a central shaft 8 to the ends of which are connected, in the manner that will be clarified later, a first crank 6 and a second crank 1. Said supporting box 100 can also be, in general, integrated into the structure of a vehicle. Each crank preferably includes a circular hub, which is used to fix it in a rotary manner to the supporting box 100, and an arm which may comprise an attachment point for a pedal 1A, 6A. Furthermore, the shaft 8 can be associated with at least one crown wheel 9. Said at least one crown wheel 9 is adapted to actuate a chain, which connects, for example, the crank mechanism to the rear transmission pinion or pinions. All conventional mechanisms for connecting the chain from a crown wheel to one or more transmission pinions can be used in conjunction with the device according to the invention.

However, the present invention can be used with many other types of mechanisms. Another example is a drive shaft, which connects the crank device to the rear wheels. Since these components are known to the person skilled in the art, they will not be illustrated or described in detail within the scope of this description.

In general, a user can provide the driving force by pushing with one foot, e.g., a pedal attached to the end of the first crank 6. This will cause the first crank 6 to move counterclockwise (cranks can be oriented in the direction opposite to the direction of motion). The reversing gear of the device according to the invention will make said second crank 1 move clockwise. Thus, when the user pushes on a first pedal, the second pedal goes up. Once the first pedal reaches the bottom of its stroke, the process reverses; the second pedal will be in the raised position, ready to be pushed down by the user. At this point, the reversing gear of the device according to the invention will promote the reversal of the motion of the first pedal, which will rise to a position suitable to be pushed by the user, starting the cycle again.

In further detail and with reference to the functional diagram in Fig. 1, said supporting box 100 comprises a drive shaft 8 having its ends connected to a first crank 6 and second crank 1. The transmission between the two parallel shafts 8, 8a uses a pair or a trio of gears, chains or belts to make a direct and a reversing transmission and comprises unidirectional couplings - or freewheels - 7a, 7b, designed to ensure as a whole that the two cranks 1, 6 always rotate in the opposite direction and engage alternately with shaft 8 to transmit the torque applied by the user on the cranks 1, 6.

The aforementioned freewheels, or unidirectional joints, act so that the motor element pulls the driven element when it rotates in one direction, while automatically detaching from it when it rotates in the opposite direction. The aforesaid freewheels are known to the person skilled in the art and made commercially in various modes and versions; therefore, they will not be described in further detail in the course of this description.

The first crank 6 is connected to a first transmission wheel 5. To bypass the transmission member 9, 10, the second crank 1 is connected to a lever which acts as a torque transmitter 2, connected to a second transmission wheel 3. Said first and second transmission wheels 5, 3 are placed next to each other, supported by said transmission shaft 8, and have competing axes. To enable the reversal of the direction of rotation of the aforementioned first and second toothed wheels 5, 3, a third toothed wheel 4a is installed on the auxiliary shaft 8a, connected to the second toothed wheel 3. The wheel 4a is integral with the transmission wheel 4b also keyed onto the auxiliary shaft 8a. The transmission wheel 4b is connected to the transmission wheel 5 by means of the transmission element 60 (chain, belt, cord, or double gear transmission). In brief, the device provides two transmissions to the auxiliary shaft 8a, of which one reverses the direction of rotation (between transmission wheels 3, 4a) and the other (between transmission wheels 4b, 5) maintains it. A toothed wheel kinematic mechanism 4 may be present, capable of meshing both the first toothed wheel 5 and the second toothed wheel 3. Preferably, the aforementioned first and second toothed wheels 5, 3 are characterized by a tooth profile having a height less than or equal to 12 mm. In preferred embodiments of the present invention, said first and second toothed wheels 5, 3, and said third toothed wheel 4 can be of conical type. Alternatively, said first and second toothed wheels 5, 3, can be cylindrical type, and said toothed wheel kinematics comprises pinions 4a, 4b with parallel axes, as shown in Fig. 8. In conclusion, the reversal of motion between transmission wheels 5, 3 can be achieved by many different types of mechanisms which are nevertheless within the scope of the present invention.

Said first crank 6 and said second crank 1 are respectively associated with a first unidirectional coupling, 7a and a second unidirectional coupling 7b adapted to transmit the torque impressed by a user on the cranks 1, 6, to the drive shaft 8 and set in motion said drive shaft 8 in the desired direction. Said unidirectional joints 7a, 7b are such to lock said cranks 1, 6 with said shaft 8 when said cranks are actuated by a user in a predetermined direction (e.g., anticlockwise) and are such to disengage said cranks 1, 6 from said shaft 8 when said cranks are actuated in the opposite direction with respect to said predetermined direction (e.g., clockwise).

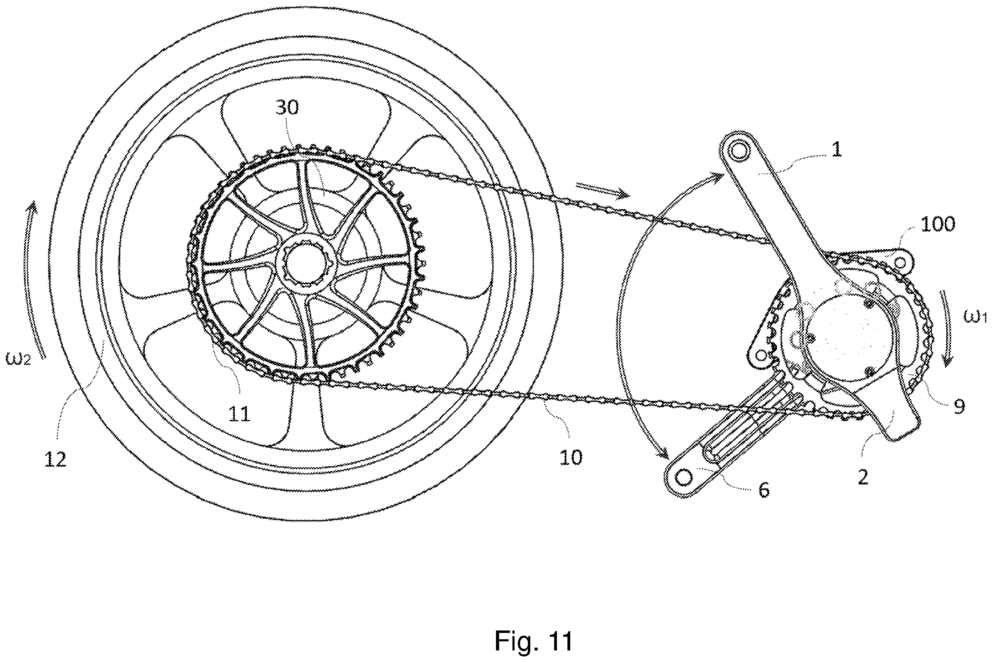

Furthermore, the drive shaft 8 can be connected to a crown wheel 9 which can transfer, by means of an appropriate transmission member 10, the torque expressed to the driven crown 11 that can be connected integrally, in turn, to a driven wheel 12. Said transmission members 10 can be made, for example, by a transmission chain, shown in accompanying Figs. 10 and 11.

The aforementioned lever 2, acting as a torque transmitter, makes it possible to make said second crank 1 integral to the second toothed wheel 3 without interfering with the crown wheel 9 and the transmission member 10. This solves the problem of interference with driving crown wheel 9 and transmission member 10, which occurs, for example, if the crank 1 works in a circle arc concordant with the position of the transmission member 10.

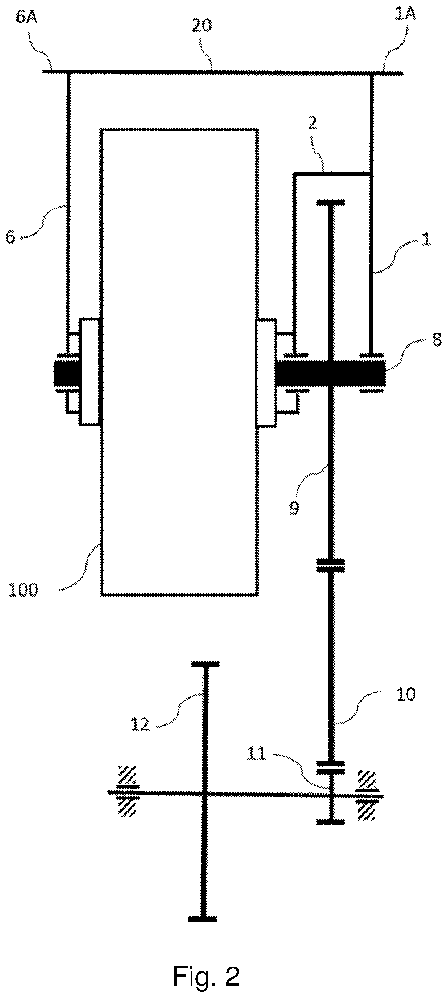

Fig. 2 shows an optional configuration to the diagram in Fig. 1, in which said supporting box 100 provides for said first crank 6 and said second crank 1 rigidly connected to each other with parallel axes. Said torque transmitter 2, rigidly connected to the cranks 1, 6 again allows torque to be transferred without interfering with the rotation of the driving crown wheel 9. This a parallel crank configuration allows both push and pull torque to be generated at the drive shaft 8.

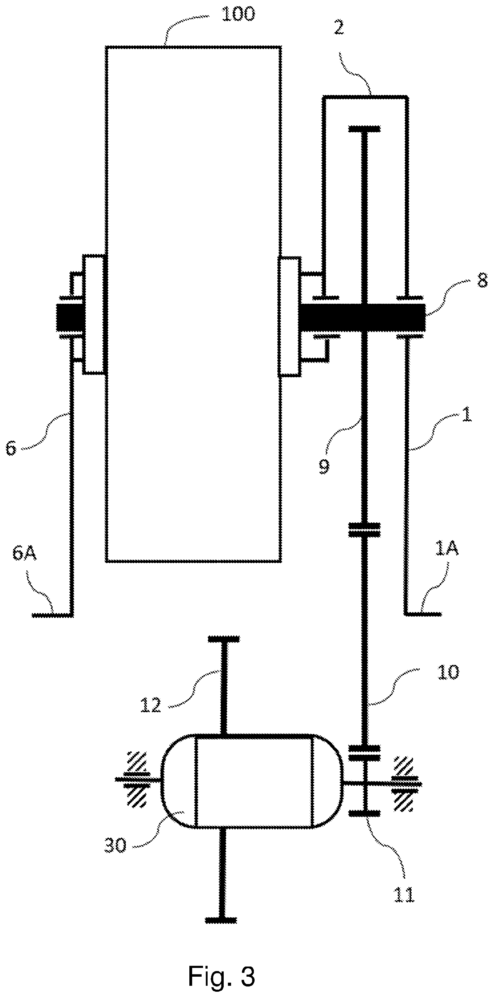

Fig. 3 shows an optional configuration compared with the configuration shown in Fig. 1, wherein the driven crown wheel 11 is connected directly or by means of toothed wheels to an electric generator/motor 30 connected in turn to the driven wheel 12. When the cranks 1, 6 generate an active torque at the drive shaft 8, the transmission member 10 transfers the torque to the crown wheel 11 allowing a resultant torque given by the torque generated by the cranks 1, 6 and the generator/electric motor 30 to develop on the driven wheel 12. When the cranks 1, 6 do not transmit active torque to the drive shaft 8, the generator/electric motor 30 receives mechanical torque from the driven wheel 12 by converting it into electrical energy.

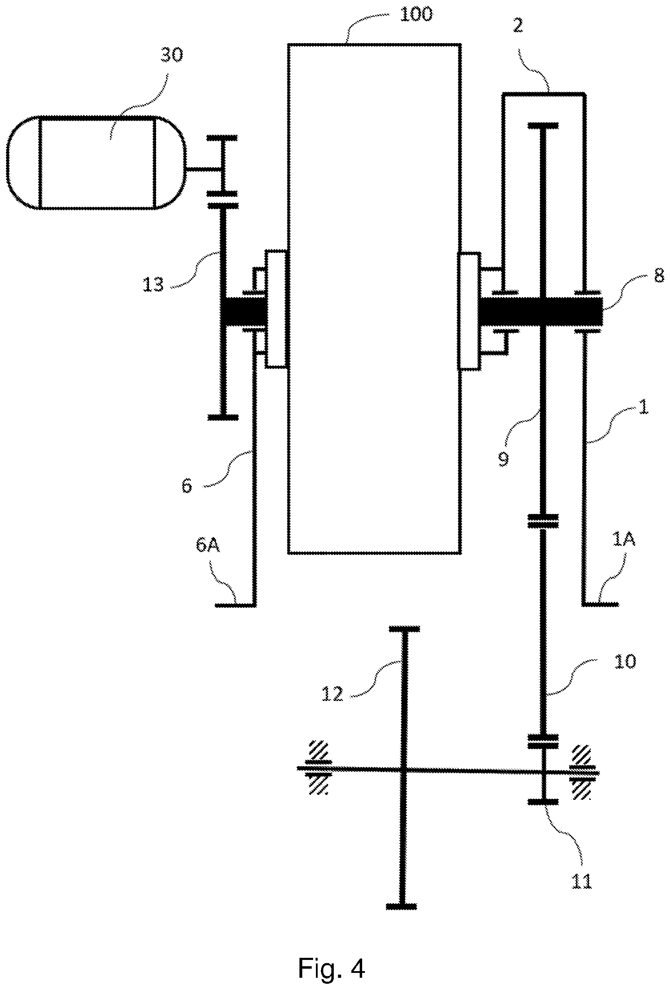

Fig. 4 shows an optional configuration compared with the configuration shown in Fig. 1, in which the drive shaft 8 is connected directly or by means of toothed wheels to an electric generator/motor 30 by means of a transmission member 13. The generator/electric motor 30 provides auxiliary torque to drive shaft 8 by working as an electric motor when the cranks 1, 6 transmit active torque to the drive shaft 8. During the stall phase of the cranks 1, 6, the generator/electric motor 30 receives mechanical torque generated by the inertia of the driven wheel 12 by means of the transmission member 10 to generate electric current. The generator/electric motor 30 can also be advantageously placed inside said supporting box 100 or outside by suitable anchorage to the vehicle structure.

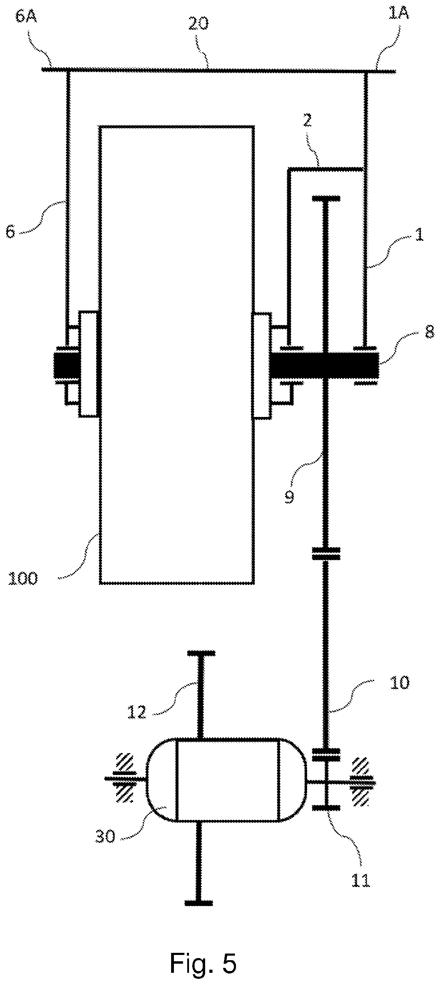

Fig. 5 shows an optional configuration compared with the configuration shown in Fig. 3 in which said supporting box 100 requires the cranks 1, 6 to be rigidly connected to each other with parallel axes. Again in this case, said torque transmitter 2, rigidly connected to the cranks 1, 6, allows the advantageous torque transfer without interfering with the rotation of the driving crown wheel 9. This configuration with parallel levers or cranks allows both pushing and pulling torque to be generated at the drive shaft 8.

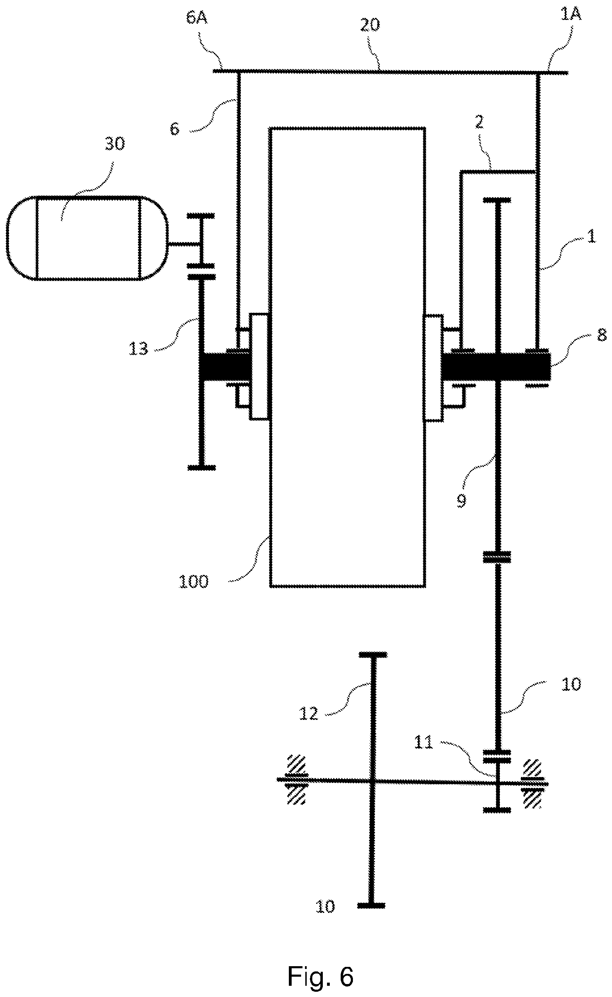

Fig. 6 shows an optional configuration compared with the configuration shown in Fig. 4 in which said supporting box 100 requires the cranks 1, 6 to be rigidly connected to each other with parallel axes. Again, said torque transmitter 2, rigidly connected to cranks 1, 6, allows torque to be transferred without interfering with the rotation of the driving crown wheel 9. Again, the configuration with parallel levers or cranks allows both pushing and pulling torque to be generated at the drive shaft 8.

Accompanying Fig. 7 shows an embodiment corresponding to the functional diagram shown in Fig. 1, in which cranks 1, 6 are connected to the outside of said supporting box 100.

In Fig. 8, another embodiment of the reversing kinematic motion by using only cylindrical gears is shown. In this preferred embodiment, said toothed wheel kinematic motion, which allows mechanical reversal of the first and second toothed wheels 5, 3, is achieved by means of the use of parallel-axis pinions 4a, 4b. The force F1 applied to the second crank 1 integral with the torque transmitter 2 transfers torque to said second toothed wheel 3. Therefore, said second toothed wheel 3 meshes with a first pinion 4a, which, in turn, meshes with a second toothed wheel 4b which, in turn, allows it to mesh with the second toothed wheel 5. The second toothed wheel 5, integral with the first crank 6, transmits the torque with the opposite direction of the Force F1 torque to the first unidirectional joint 7a. The first unidirectional coupling 7a, in turn, sets in motion the drive shaft 8 integral with the driving crown wheel 9 allowing it to rotate in the desired direction indicated by the arrow ω1.

The torque transfer described above occurs in the same configuration when the force applied to the first crank 6 allows the drive shaft 8 to be pulled by the second freewheel 7b.

The aforementioned torque transfer is achieved by starting with Forces F1 and F2, which by means of unidirectional joints 7a, 7b pull the drive shaft 8 in the desired direction. In other words, if a top-down thrust is applied to one of the cranks, the transmission wheel adjacent to the crank will be set to rotate in the same direction as the movement of the actuated crank while the other transmission wheel on the shaft 8 will rotate in the opposite direction. One of the two wheels will still be meshing on the shaft 8 by means of its unidirectional joint. In this manner, a reciprocating motion imparted on cranks 1, 6 by means of unidirectional joints 7a, 7b allows continuous circular motion to be generated at the drive shaft 8.

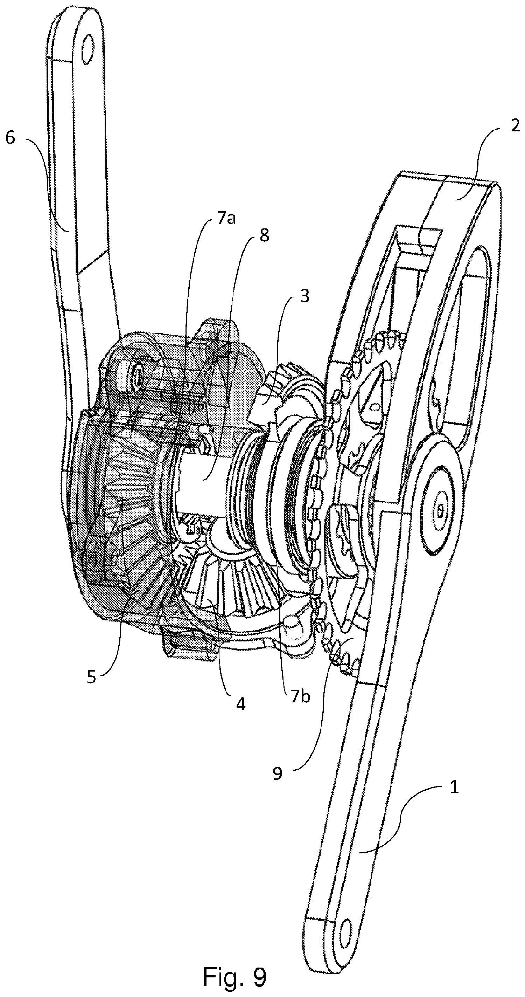

Fig. 9 shows a preferred alternative embodiment to the one shown in Fig. 8, wherein said first toothed wheel 3 meshes meshed with the toothed wheel 4a. The toothed wheel 4a integral with wheel 4b transmits (or receives) motion to the wheel 5 by means of the transmission element 60. The lever 2, as torque transmitter, integral with the toothed wheel 3, bypasses the transmission member 9, 10, and makes the wheel integral with the crank 1. This configuration allows the crank 1 to work in a circle arc contiguous with the transmission member 9, 10.

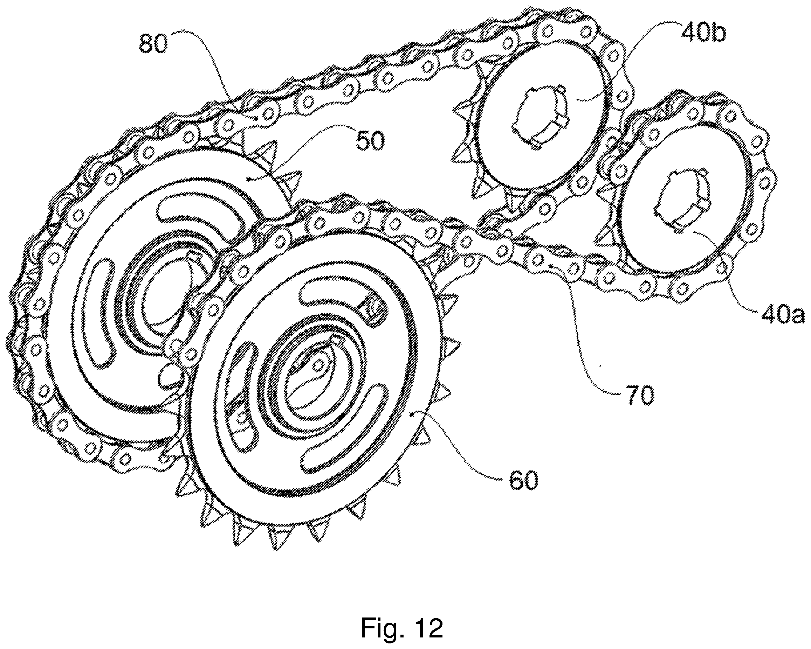

Figure 12 shows an additional preferred alternative embodiment to the one shown in Fig. 8, wherein instead of said first toothed wheel 5, and said second toothed wheel 3 and said pinions 4a, 4b are used, respectively, crown wheels 50 and 60 and crown wheels 40a and 40b. In this embodiment, a transmission chain 80 connects the crown wheel 50 with the crown wheel 40B allowing it to rotate in the same direction of rotation, and a transmission chain 70 connects the crown wheel 60 with the crown wheel 40a, said chain 70 being installed to allow said crown wheel 60 to rotate in the opposite direction with respect to said crown wheel 40a.

The torque transmitted on the crown wheel 60 is transferred to crown wheel 40a by reversing the direction of rotation. Said crown wheel 40a, being integral on the same rotating shaft, transmits torque to crown wheel 40b, and said crown wheel 40b, in turn, transmits torque to crown wheel 50. The preferred embodiment of Fig. 12 can also be implemented by reversing the connection of said chains 80 and 70 while maintaining the reversal of the direction of rotation between said crown wheel 60 and said crown wheel 50 as the end result.

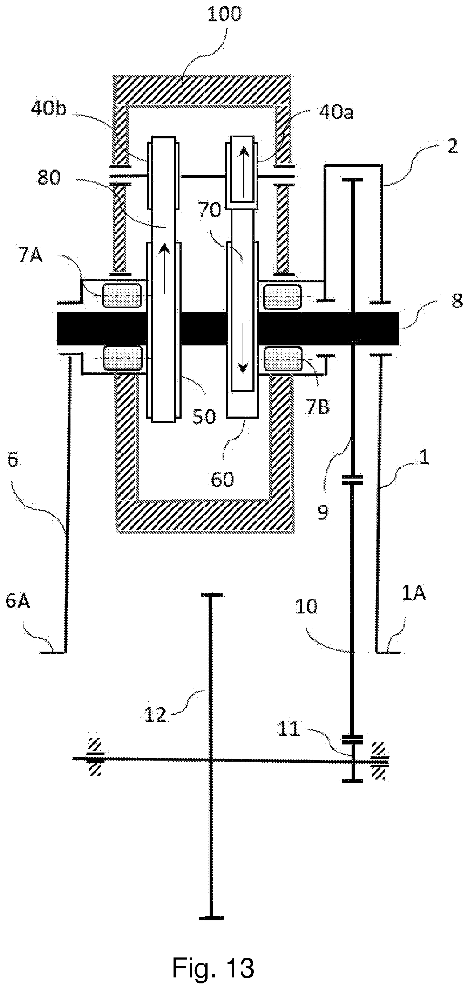

Figure 13 shows the functional diagram of the device according to the representation in Fig 12.

In Fig. 10, the device according to this description in the version shown in Fig. 7 is installed on a bicycle frame 40, on which the crown wheel 9 by means of the transmission chain 10 allows the driven crown wheel 11 - or a group of driven crown wheels - to take the driven wheel 12 into rotation. The driven wheel 12, integral with the driven crown wheel 11, allows the inertia of rotation to be transmitted to the driving crown wheel 9 when the cranks 1, 6 do not transmit the torque to the drive shaft 8 by means of the unidirectional joints 7a, 7b.

Figure 11 shows an example of the application of the configuration described in the diagram in Fig. 3. The device according to the present invention transmits torque from the driving crown wheel 9 to the driven wheel 11 or group of driven wheels by means of the transmission chain 10. The driven wheel 11, integral with the generator/electric motor 30, allows a resultant torque to be transmitted to the driven wheel 12 given by the mechanical torque generated by the device and the torque supplied by the generator/electric motor 30. When the device does not transmit active torque to the driven wheel 11, the motion inertia of the wheel 12 allows the generator/electric motor 30 to generate electric current.

The device according to this description makes it possible to solve the problems of the prior art mentioned above and is advantageously applied both in pedal-powered vehicles (bicycles, racing bicycles, MTBs, fitness bikes, touring bikes, hand-bikes, etc.) and in equipment used, for example, in gyms, for arm and leg training by virtue of the flexibility of use and configuration.

## Claims

1. A device for transmitting a driving torque comprising:
a shaft (8);
a crown wheel (9) associated with said shaft (8);
a first crank (6) connected to a first transmission element-(5, 50);
a second crank (1) connected to a second transmission element (3, 60);
a first unidirectional joint (7a) connected to said first crank (6);
a second unidirectional joint (7b) connected to said second crank (1),
said unidirectional joints (7a, 7b) being adapted to lock said cranks (1, 6) with said shaft (8) when said cranks are actuated by a user in a predetermined direction and are such to disengage said cranks (1, 6) from said shaft (8) when said cranks are actuated in the opposite direction with respect to said predetermined direction;
a torque transmitter (2) which connects said second crank (1) to said second transmission element (3, 60), said torque transmitter (2) being adapted to bypass said crown wheel (9) so as to avoid interfering with the movement of said crown wheel (9) during the movement of said cranks (1, 6);
a reversing element comprising a kinematic mechanism adapted to engage with said first transmission element (5, 50) and said second transmission element (3, 60) and adapted to force said cranks (1, 6) to rotate in opposite directions,
**characterized in that** said kinematic mechanism is of the parallel axis type and adapted to supply continuous driving torque to said shaft (8) and said crown wheel (9) during the movement of said cranks (1, 6).

2. A device according to claim 1, **characterized in that** it comprises a supporting box (100).

3. A device according to one or more of the preceding claims, **characterized in that** said unidirectional joints (7a, 7b) are adapted to engage in one direction and release the movement of the opposite direction.

4. A device according to one or more of the preceding claims, **characterized in that** said unidirectional joints (7a, 7b) are accommodated inside said supporting box (100).

5. A device according to one or more of the claims from 1 to 4, **characterized in that** said unidirectional joints (7a, 7b) are installed directly on said cranks (1, 6).

6. A device according to one or more of the preceding claims, **characterized in that** said supporting box (100) is integrated in the structure of a vehicle.

7. A device according to one or more of claims 2 to 6, **characterized in that** said cranks (1, 6) comprise a hub adapted to fix said cranks (1, 6) in a rotary manner to said supporting box (100).

8. A device according to one or more of the preceding claims, **characterized in that** said cranks (1, 6) comprise an arm provided with fixing means for a pedal (1A, 6A).

9. A device according to one or more of the preceding claims, **characterized in that** said crown wheel (9) is associated with a transmission member (10), adapted to transmit the motion of said crown wheel (9) to a driven crown (11) wheel.

10. A device according to the preceding claim, **characterized in that** the driven crown wheel (11) is connected to an electric generator/motor (30).

11. A device according to one or more of the preceding claims, **characterized in that** the drive shaft (8) is connected to an electric generator/motor (30) by means of a transmission member (13).

12. A device according to one or more of the preceding claims, **characterized in that** said first crank (6) and said second crank (1) are rigidly connected to each other so that their axes are parallel.

13. A device according to one or more of the preceding claims, **characterized in that** said first transmission element is connected to the first crank (6) and comprises a first crown wheel (5) and said second transmission element is connected to the crank (1) and comprises a second crown wheel (3), said
first crown wheel (5) and said second crown wheel (3) being coaxial to the output shaft (8).

14. A device according to the preceding claim, **characterized in that** said inversion element comprises a toothed wheel kinematic mechanism (3,4a) and a transmission element 60 acting on two transmission wheels (4b,5).

15. A device according to the preceding claim, **characterized in that** said toothed wheel kinematic mechanism comprises two crown wheels (5,3) and twc pinions (4a, 4b).

16. A device according to one or more of claims 13 to 15, **characterized in that** said toothed crown wheels (3, 5) have a tooth profile having a height less than, or equal to 12 mm.

17. A device according to one or more of claims 1 to 12, **characterized in that** said first transmission element comprises a first crown wheel (50) and said second transmission element comprises a second crown wheel (60), said first crown wheel (50) and said second crown wheel (60) being coaxial to the output shaft (8).

18. A device according to the preceding claim, **characterized in that** said inversion element comprises a crown wheel kinematic mechanism.

19. A device according to the preceding claim, **characterized in that** said crown wheel and parallel axes kinematic mechanism comprises two crown wheels (40a, 40b) and two drive chains (70, 80) adapted to engage said first crown wheel (50) and said second crown wheel (60) with the crown wheels of said crown wheel kinematic mechanism.

20. A pedal-powered vehicle comprising a device for transmitting a driving torque according to one or more of the preceding claims.

21. Machinery for training arms and legs of a user comprising a device for transmitting a driving or drag torque according to one or more of the preceding claims.

## Patentansprüche

1. Vorrichtung zur Übertragung eines Antriebsmoments, umfassend:
eine Welle (8);
ein mit der Welle (8) verbundenes Kronrad (9);
eine erste Kurbel (6), die mit einem ersten Übertragungselement (5, 50) verbunden ist;
eine zweite Kurbel (1), die mit einem zweiten Übertragungselement (3, 60) verbunden ist;
ein erstes Einweggelenk (7a), das mit der ersten Kurbel (6) verbunden ist;
ein zweites Einweggelenk (7b), das mit der zweiten Kurbel (1) verbunden ist, wobei die Einweggelenke (7a, 7b) dazu ausgelegt sind, die Kurbeln (1, 6) mit der Welle (8) zu verriegeln, wenn die Kurbeln von einem Benutzer in einer vorbestimmten Richtung betätigt werden, und dazu beschaffen sind, die Kurbeln (1, 6) von der Welle (8) auszurücken, wenn die Kurbeln in der zu der vorbestimmten Richtung entgegengesetzten Richtung betätigt werden;
eine Drehmomentübertragungseinrichtung (2), die die zweite Kurbel (1) mit dem zweiten Übertragungselement (3, 60) verbindet, wobei die Drehmomentübertragungseinrichtung (2) dazu ausgelegt ist, das Kronrad (9) zu umgehen, um eine Beeinträchtigung der Bewegung des Kronrads (9) während der Bewegung der Kurbeln (1, 6) zu verhindern;
ein Umkehrelement, das einen kinematischen Mechanismus umfasst, der dazu ausgelegt ist, mit dem ersten Übertragungselement (5, 50) und dem zweiten Übertragungselement (3, 60) in Eingriff zu treten, und dazu ausgelegt ist, die Kurbeln (1, 6) zu zwingen, sich in entgegengesetzte Richtungen zu drehen,
**dadurch gekennzeichnet, dass** der kinematische Mechanismus vom Parallelachsen-Typ ist und dazu ausgelegt ist, während der Bewegung der Kurbeln (1, 6) ein kontinuierliches Antriebsmoment an die Welle (8) und das Kronrad (9) zu liefern.

2. Vorrichtung nach Anspruch 1, **dadurch gekennzeichnet, dass** sie einen Stützkasten (100) umfasst.

3. Vorrichtung nach einem oder mehreren der vorhergehenden Ansprüche, **dadurch gekennzeichnet, dass** die Einweggelenke (7a, 7b) dazu ausgelegt sind, in einer Richtung in Eingriff zu treten und die Bewegung in der entgegengesetzten Richtung freizugeben.

4. Vorrichtung nach einem oder mehreren der vorhergehenden Ansprüche, **dadurch gekennzeichnet, dass** die Einweggelenke (7a, 7b) innerhalb des Stützkastens (100) untergebracht sind.

5. Vorrichtung nach einem oder mehreren der Ansprüche 1 bis 4, **dadurch gekennzeichnet, dass** die Einweggelenke (7a, 7b) direkt an den Kurbeln (1, 6) angebracht sind.

6. Vorrichtung nach einem oder mehreren der vorhergehenden Ansprüche, **dadurch gekennzeichnet, dass** der Stützkasten (100) in die Struktur eines Fahrzeugs integriert ist.

7. Vorrichtung nach einem oder mehreren der Ansprüche 2 bis 6, **dadurch gekennzeichnet, dass** die Kurbeln (1, 6) eine Nabe umfassen, die dazu ausgelegt ist, die Kurbeln (1, 6) drehbar an dem Stützkasten (100) zu befestigen.

8. Vorrichtung nach einem oder mehreren der vorhergehenden Ansprüche, **dadurch gekennzeichnet, dass** die Kurbeln (1, 6) einen Arm umfassen, der mit Befestigungsmitteln für ein Pedal (1A, 6A) versehen ist.

9. Vorrichtung nach einem oder mehreren der vorhergehenden Ansprüche, **dadurch gekennzeichnet, dass** das Kronrad (9) mit einem Übertragungselement (10) verbunden ist, das dazu ausgelegt ist, die Bewegung des Kronrads (9) auf ein angetriebenes Kronrad (11) zu übertragen.

10. Vorrichtung nach dem vorhergehenden Anspruch, **dadurch gekennzeichnet, dass** das angetriebene Kronrad (11) mit einem elektrischen Generator/Motor (30) verbunden ist.

11. Vorrichtung nach einem oder mehreren der vorhergehenden Ansprüche, **dadurch gekennzeichnet, dass** die Antriebswelle (8) über ein Übertragungselement (13) mit einem elektrischen Generator/Motor (30) verbunden ist.

12. Vorrichtung nach einem oder mehreren der vorhergehenden Ansprüche, **dadurch gekennzeichnet, dass** die erste Kurbel (6) und die zweite Kurbel (1) starr miteinander verbunden sind, so dass ihre Achsen parallel zueinander verlaufen.

13. Vorrichtung nach einem oder mehreren der vorhergehenden Ansprüche, **dadurch gekennzeichnet, dass** das erste Übertragungselement mit der ersten Kurbel (6) verbunden ist und ein erstes Kronrad (5) umfasst, und das zweite Übertragungselement mit der Kurbel (1) verbunden ist und ein zweites Kronrad (3) umfasst, wobei das erste Kronrad (5) und das zweite Kronrad (3) koaxial zu der Abtriebswelle (8) angeordnet sind.

14. Vorrichtung nach dem vorhergehenden Anspruch, **dadurch gekennzeichnet, dass** das Umkehrelement einen kinematischen Zahnradmechanismus (3, 4a) und ein Übertragungselement 60 umfasst, das auf zwei Übertragungsräder (4b, 5) wirkt.

15. Vorrichtung nach dem vorhergehenden Anspruch, **dadurch gekennzeichnet, dass** der kinematische Zahnradmechanismus zwei Kronräder (5, 3) und zwei Ritzel (4a, 4b) umfasst.

16. Vorrichtung nach einem oder mehreren der Ansprüche 13 bis 15, **dadurch gekennzeichnet, dass** die Kronzahnräder (3, 5) ein Zahnprofil mit einer Höhe von weniger als oder gleich 12 mm aufweisen.

17. Vorrichtung nach einem oder mehreren der Ansprüche 1 bis 12, **dadurch gekennzeichnet, dass** das erste Übertragungselement ein erstes Kronrad (50) umfasst und das zweite Übertragungselement ein zweites Kronrad (60) umfasst, wobei das erste Kronrad (50) und das zweite Kronrad (60) koaxial zu der Abtriebswelle (8) angeordnet sind.

18. Vorrichtung nach dem vorhergehenden Anspruch, **dadurch gekennzeichnet, dass** das Umkehrelement einen kinematischen Kronradmechanismus umfasst.

19. Vorrichtung nach dem vorhergehenden Anspruch, **dadurch gekennzeichnet, dass** der Kronrad- und kinematische Parallelachsen-Mechanismus zwei Kronräder (40a, 40b) und zwei Antriebsketten (70, 80) umfasst, die dazu ausgelegt sind, in das erste Kronrad (50) und das zweite Kronrad (60) mit den Kronrädern des kinematischen Kronradmechanismus einzugreifen.

20. Pedalbetriebenes Fahrzeug, das eine Vorrichtung zum Übertragen eines Antriebsmoments gemäß einem oder mehreren der vorhergehenden Ansprüche umfasst.

21. Maschine zum Trainieren der Arme und Beine eines Benutzers, die eine Vorrichtung zum Übertragen eines Antriebs- oder Schleppmoments gemäß einem oder mehreren der vorhergehenden Ansprüche umfasst.

## Revendications

1. Dispositif pour transmettre un couple moteur comprenant :
un arbre (8) ;
une couronne dentée (9) associée audit arbre (8) ;
une première manivelle (6) reliée à un premier élément de transmission (5, 50) ;
une deuxième manivelle (1) reliée à un deuxième élément de transmission (3, 60) ;
un premier joint unidirectionnel (7a) relié à ladite première manivelle (6) ;
un deuxième joint unidirectionnel (7b) relié à ladite deuxième manivelle (1), lesdits joints unidirectionnels (7a, 7b) étant adaptés pour verrouiller lesdites manivelles (1, 6) avec ledit arbre (8) lorsque lesdites manivelles sont actionnées par un utilisateur dans une direction prédéterminée et sont tels pour désengager lesdites manivelles (1, 6) dudit arbre (8) lorsque lesdites manivelles sont actionnées dans la direction opposée par rapport à ladite direction prédéterminée ;
un transmetteur de couple (2) qui relie ladite deuxième manivelle (1) audit deuxième élément de transmission (3, 60), ledit transmetteur de couple (2) étant adapté pour contourner ladite couronne dentée (9) afin d'éviter d'interférer avec le mouvement de ladite couronne dentée (9) pendant le mouvement desdites manivelles (1, 6) ;
un élément d'inversion comprenant un mécanisme cinématique adapté pour s'engager avec ledit premier élément de transmission (5, 50) et ledit deuxième élément de transmission (3, 60) et adapté pour forcer lesdites manivelles (1, 6) à tourner dans des directions opposées,
**caractérisé en ce que** ledit mécanisme cinématique est du type à axe parallèle et adapté pour fournir un couple moteur continu audit arbre (8) et à ladite couronne dentée (9) pendant le mouvement desdites manivelles (1, 6).

2. Dispositif selon la revendication 1, **caractérisé en ce qu'**il comprend un boîtier de support (100).

3. Dispositif selon une ou plusieurs des revendications précédentes, **caractérisé en ce que** lesdits joints unidirectionnels (7a, 7b) sont adaptés pour s'engager dans une direction et libérer le mouvement de la direction opposée.

4. Dispositif selon une ou plusieurs des revendications précédentes, **caractérisé en ce que** lesdits joints unidirectionnels (7a, 7b) sont logés à l'intérieur dudit boîtier de support (100).

5. Dispositif selon une ou plusieurs des revendications 1 à 4, **caractérisé en ce que** lesdits joints unidirectionnels (7a, 7b) sont installés directement sur lesdites manivelles (1, 6).

6. Dispositif selon une ou plusieurs des revendications précédentes, **caractérisé en ce que** ledit boîtier de support (100) est intégré dans la structure d'un véhicule.

7. Dispositif selon une ou plusieurs des revendications 2 à 6, **caractérisé en ce que** lesdites manivelles (1, 6) comprennent un moyeu adapté pour fixer lesdites manivelles (1, 6) de manière rotative audit boîtier de support (100).

8. Dispositif selon une ou plusieurs des revendications précédentes, **caractérisé en ce que** lesdites manivelles (1, 6) comprennent un bras muni de moyens de fixation pour une pédale (1A, 6A).

9. Dispositif selon une ou plusieurs des revendications précédentes, **caractérisé en ce que** ladite couronne dentée (9) est associée à un élément de transmission (10), adapté pour transmettre le mouvement de ladite couronne dentée (9) à une couronne dentée entraînée (11).

10. Dispositif selon la revendication précédente, **caractérisé en ce que** la couronne dentée entraînée (11) est reliée à un générateur/moteur électrique (30).

11. Dispositif selon une ou plusieurs des revendications précédentes, **caractérisé en ce que** l'arbre d'entraînement (8) est relié à un générateur/moteur électrique (30) par un élément de transmission (13).

12. Dispositif selon une ou plusieurs des revendications précédentes, **caractérisé en ce que** ladite première manivelle (6) et ladite deuxième manivelle (1) sont reliées rigidement l'une à l'autre de sorte que leurs axes sont parallèles.

13. Dispositif selon une ou plusieurs des revendications précédentes, **caractérisé en ce que** ledit premier élément de transmission est relié à la première manivelle (6) et comprend une première couronne (5) et ledit deuxième élément de transmission est relié à la manivelle (1) et comprend une deuxième couronne (3), ladite première couronne (5) et ladite deuxième couronne (3) étant coaxiales à l'arbre de sortie (8).

14. Dispositif selon la revendication précédente, **caractérisé en ce que** ledit élément d'inversion comprend un mécanisme cinématique à roue dentée (3,4a) et un élément de transmission 60 agissant sur deux roues de transmission (4b,5).

15. Dispositif selon la revendication précédente, **caractérisé en ce que** ledit mécanisme cinématique à roue dentée comprend deux couronnes dentées (5,3) et deux pignons (4a, 4b).

16. Dispositif selon une ou plusieurs des revendications 13 à 15, **caractérisé en ce que** lesdites couronnes dentées (3, 5) ont un profil de dent ayant une hauteur inférieure ou égale à 12 mm.

17. Dispositif selon une ou plusieurs des revendications 1 à 12, **caractérisé en ce que** ledit premier élément de transmission comprend une première couronne dentée (50) et ledit deuxième élément de transmission comprend une deuxième couronne dentée (60), ladite première couronne dentée (50) et ladite deuxième couronne dentée (60) étant coaxiales à l'arbre de sortie (8).

18. Dispositif selon la revendication précédente, **caractérisé en ce que** ledit élément d'inversion comprend un mécanisme cinématique de couronne dentée.

19. Dispositif selon la revendication précédente, **caractérisé en ce que** ledit mécanisme cinématique à couronne dentée et axes parallèles comprend deux couronnes dentées (40a, 40b) et deux chaînes d'entraînement (70, 80) adaptées pour engager ladite première couronne dentée (50) et ladite deuxième couronne dentée (60) avec les couronnes dentées dudit mécanisme cinématique à couronne dentée.

20. Véhicule à pédales comprenant un dispositif pour transmettre un couple moteur selon une ou plusieurs des revendications précédentes.

21. Ensemble de machines pour entraîner les bras et les jambes d'un utilisateur, comprenant un dispositif pour transmettre un couple moteur ou de traînée selon une ou plusieurs des revendications précédentes.
